# EUROPEAN PATENT APPLICATION

(11) **EP 4 596 979 A1**
(43) Date of publication of application: **06.08.2025**
(21) Application number: 23869553.0
(22) Date of filing: 14.04.2023
(51) Int. Cl.: F24D 15/00, F24D 15/04, C01D 15/08, F24D 15/02

(54) **ENERGY SUPPLY SYSTEM SUITABLE FOR SALT LAKE LITHIUM EXTRACTION AND METHOD FOR SUPPLYING ENERGY BY USING SAME**

(30) Priority: 30.09.2022 CN 202211216709
(71) Applicant: BYD Company Limited, Shenzhen, Guangdong 518118 (CN)
(72) Inventor: GONG, Qing, Shenzhen, Guangdong 518118 (CN); MA, Yuegeng, Shenzhen, Guangdong 518118 (CN); LIAN, Junlan, Shenzhen, Guangdong 518118 (CN); LIN, Hongye, Shenzhen, Guangdong 518118 (CN)
(74) Representative: Mathys & Squire
(86) International application number: PCT/CN2023/088465
(87) International publication number: WO 2024/066297

(57) **Abstract**

The present application discloses an energy supply system suitable for salt lake lithium extraction and a method for supplying energy by using same. The system comprises: a lithium extraction unit, a water source supply unit, a heating unit, a heat exchange unit, a steam supply unit, and a lithium extraction plant. The water source supply unit comprises a water storage tank and a first solid heat storage assembly. A second solid heat storage assembly of the heating unit is connected to the heat exchange unit, and is connected to the lithium extraction plant by means of a building heating water supply pipeline. The lithium extraction unit comprises an adsorption assembly, a membrane assembly, an evaporation assembly and a lithium precipitation assembly, and the water storage tank is connected to the adsorption assembly. A third solid heat storage assembly of the steam supply unit is connected to the evaporation assembly and the lithium precipitation assembly. The second solid heat storage assembly is connected to the heat exchange unit, and the lithium extraction plant is connected to the heat exchange unit by means of a building heating water return pipeline. The heat exchange unit is connected to the third solid heat storage assembly.

## Description

### CROSS-REFERENCE TO RELATED APPLICATIONS

This application claims priority to and benefits of Chinese Patent Application No. 202211216709.6, filed on September 30, 2022. The entire content of the above-referenced application is incorporated herein by reference.

### FIELD

The present disclosure relates to the technical field of lithium extraction from salt lakes, and specifically, to an energy supply system suitable for lithium extraction from salt lakes and a method for supplying energy using same.

### BACKGROUND

Lithium and its compounds are widely used and have important strategic value for the development of the country and society. Salt lakes are important potential places of production of lithium resources in China. However, due to the relatively low concentration of lithium in salt lakes in China, the process of extracting a lithium salt from salt lake brine is complex and requires a large amount of low-grade heat energy to provide hot water, vapor and plant heating required in the lithium extraction process. Salt lake lithium extraction projects in some areas of China mainly adopt a process integrating an adsorption method, a membrane method, and evaporation and concentration, in which lithium elements in brine are gradually selectively enriched and concentrated, and finally a battery-grade lithium carbonate product is prepared through a precipitation reaction. In the process of lithium extraction from brine, the comprehensive energy consumption power for producing one ton of lithium carbonate ranges from 2 to 8 tons of standard coal, with an energy cost of 0.7 to 2 million yuan per ton of lithium carbonate produced, accounting for 20% to 50% of the operation cost of the salt lake lithium extraction project. Therefore, the cost of energy supply system has a significant impact on the income of lithium carbonate production plants.

The corresponding costs of energy supply such as heating, process vapor and process hot water account for 40% to 80% of the total energy cost of the salt lake lithium extraction system. Therefore, at present, it is an urgent problem to provide an energy supply system suitable for lithium extraction from salt lakes and a method for supplying energy using same, to reduce the energy cost.

### SUMMARY

The present disclosure is made based on the inventors' findings and knowledge of the following facts and problems:

Solid electric heat storage devices are a new type of heating equipment which has gradually matured in recent years. Compared with conventional gas-fired boilers, the solid electric heat storage device is safe and reliable, without potential danger, with a high degree of automatic control, convenient management, and a wide applicable temperature range, and can realize the supply of hot water and vapor. In addition, because it can effectively accommodate the abundant new energy power generation capacity at some salt lakes, it can realize heat storage and heating by using low-cost valley power, and the whole process has zero carbon emissions, and can effectively reduce the operation cost of the system.

In addition, there is a large amount of low-grade waste heat in the salt lake lithium extraction system using the adsorption method, the membrane method, and evaporation and concentration, which has potential utility value. In conventional process systems, such waste heat is often discarded, resulting in a higher demand for energy supply, and increasing the energy consumption and operation costs of the system. Based on the principle of orderly echelon utilization of energy, reasonable reuse of such process waste heat can effectively reduce the energy consumption and corresponding operation costs of the system.

To sum up, if an energy supply system using a solid heat storage device, a waste heat recovery device and the like can be provided, it is expected to realize zero carbon emissions in the process while providing process hot water, process vapor and heating needed by the salt lake lithium extraction system, and effectively reduce the initial investment and operation costs of the whole system by fully reusing the process waste heat in the lithium extraction process. Therefore, an energy supply system using a solid heat storage device, waste heat recovery equipment and the like has high application potential in salt lake lithium extraction plants.

In view of this, to alleviate or solve, at least to some extent, at least one of the above-mentioned problems, according to an aspect of the present disclosure, the present disclosure provides an energy supply system suitable for lithium extraction from salt lakes. According to an example of the present disclosure, the energy supply system suitable for lithium extraction from salt lakes comprises: a lithium extraction unit, a water supply unit, a heating unit, a heat exchange unit, a vapor supply unit, and a lithium extraction plant, wherein the lithium extraction unit, the water supply unit, the heating unit, the heat exchange unit, and the vapor supply unit are all arranged in the lithium extraction plant; the water supply unit comprises a water storage tank and a first solid heat storage component, and a hot water outlet of the first solid heat storage component and a cold water inlet of the first solid heat storage component are respectively connected to the water storage tank; the heating unit comprises a second solid heat storage component, the second solid heat storage component is connected to the heat exchange unit, and the second solid heat storage component is connected to the lithium extraction plant through a building heating water supply pipeline; the lithium extraction unit comprises an adsorption component, a membrane component, an evaporation component, and a lithium precipitation component which are connected in sequence, and a hot water outlet of the water storage tank is connected to the adsorption component to provide required hot water for the adsorption component; the vapor supply unit comprises a third solid heat storage component, and the third solid heat storage component is respectively connected to the evaporation component and the lithium precipitation component to provide a vapor heat source for the evaporation component and the lithium precipitation component; the second solid heat storage component is connected to the heat exchange unit, the lithium extraction plant is connected to the heat exchange unit through a building heating return pipeline, and the second solid heat storage component, the building heating water supply pipeline, the lithium extraction plant, the building heating return pipeline, and the heat exchange unit form a heating loop; the evaporation component and the lithium precipitation component are respectively connected to the heat exchange unit, and condensed water in the evaporation component and the lithium precipitation component is used for exchanging heat with building heating return water in the building heating return pipeline in the heat exchange unit; and the heat exchange unit is connected to the third solid heat storage component, and the vapor heat source provided by the third solid heat storage component returns to the third solid heat storage component after heat exchange. Therefore, the energy supply system integrates the advantages of the solid heat storage components, the heat exchange units, etc., and can reduce carbon emissions or even achieve zero carbon emissions while providing process hot water, process vapor and heating for salt lake lithium extraction, make full use of the waste heat of building heating return water, and effectively reduce the investment and operation costs of the energy supply system.

According to another aspect of the present disclosure, the present disclosure provides a method for supplying energy using the energy supply system suitable for lithium extraction from salt lakes. According to an example of the present disclosure, the method for supplying energy using the energy supply system comprises: the first solid heat storage component, the second solid heat storage component, and the third solid heat storage component storing heat during valley power; brine entering the adsorption component and being absorbed by an adsorbent; generated adsorption tail brine being discharged from the energy supply system; after being absorbed by the adsorbent, the brine being subjected to desorption treatment to form a first qualified liquid; the first qualified liquid entering the membrane component and being treated to obtain usable water and a second qualified liquid; the second qualified liquid entering the evaporation component for evaporation and concentration treatment to form a third qualified liquid, the third qualified liquid entering the lithium precipitation component, the third qualified liquid being treated by the lithium precipitation component to obtain a product and a lithium precipitation mother liquor, and the lithium precipitation mother liquor entering the heat exchange unit; building heating return water generated by the lithium extraction plant entering the heat exchange unit; after exchanging heat in the heat exchange unit, the building heating return water entering the second solid heat storage component to generate building heating water, and the building heating water being transmitted to the lithium extraction plant; and the heat exchange unit generating solid heat storage component return water, the solid heat storage component return water entering the third solid heat storage component, and the third solid heat storage component providing a vapor heat source for the evaporation component and the lithium precipitation component of the lithium extraction unit. Therefore, the energy supply system can be used to provide process hot water, process vapor and heating for salt lake lithium extraction, and at the same time, reduce carbon emissions or even realize zero carbon emissions, and fully recover and utilize process waste heat, thereby reducing the investment and operation costs of the system.

### BRIEF DESCRIPTION OF THE DRAWINGS

The above and/or other additional aspects and advantages of the present disclosure become apparent and comprehensible from the description of examples in connection with accompanying drawings, in which:
FIG. 1 is a schematic structural diagram of an energy supply system suitable for lithium extraction from salt lakes according to an example of the present disclosure;
FIG. 2 is a schematic structural diagram of an energy supply system suitable for lithium extraction from salt lakes according to another example of the present disclosure;
FIG. 3 is a schematic structural diagram of an energy supply system suitable for lithium extraction from salt lakes according to still another example of the present disclosure;
FIG. 4 is a schematic structural diagram of an energy supply system suitable for lithium extraction from salt lakes according to still another example of the present disclosure;
FIG. 5 is a schematic structural diagram of an energy supply system suitable for lithium extraction from salt lakes according to still another example of the present disclosure;
FIG. 6 is a schematic structural diagram of an energy supply system suitable for lithium extraction from salt lakes according to still another example of the present disclosure;
FIG. 7 is a schematic structural diagram of an energy supply system suitable for lithium extraction from salt lakes according to still another example of the present disclosure; and
FIG. 8 is a schematic structural diagram of an energy supply system suitable for lithium extraction from salt lakes according to still another example of the present disclosure.

### List of reference numerals:

100: lithium extraction unit; 110: adsorption component; 111: first outlet of adsorption component; 120: membrane component; 121: inlet of membrane component; 122: concentrated waste liquid outlet of membrane component; 130: evaporation component; 140: lithium precipitation component; 150: seventh valve; 160: eighth valve; 200: water supply unit; 210: water source heat pump; 211: hot water outlet of water source heat pump; 212: cold water inlet of water source heat pump; 213: cold circulating water outlet of water source heat pump; 214: hot circulating water inlet of water source heat pump; 220: water storage tank; 221: hot water outlet of water storage tank; 230: first solid heat storage component; 231: hot water outlet of first solid heat storage component; 232: cold water inlet of first solid heat storage component; 240: first heat exchange component; 241: hot side inlet of first heat exchange component; 242: hot side outlet of first heat exchange component; 250: second heat exchange component; 251: hot side inlet of second heat exchange component; 252: hot side outlet of second heat exchange component; 260: raw water supply pipeline; 261: first branch; 262: second branch; 270: second diverter valve; 280: fifth diverter valve; 300: heating unit; 310: second solid heat storage component; 400: heat exchange unit; 410: third heat exchange component; 420: fourth heat exchange component; 430: fifth heat exchange component; 440: sixth heat exchange component; 450: condensate recovery component; 451: drain port; 460: first diverter valve; 470: third diverter valve; 481: first valve; 482: second valve; 483: third valve; 484: fourth valve; 485: fifth valve; 486: sixth valve; 500: vapor supply unit; 510: third solid heat storage component; 520: vapor supply pipeline; 530: fourth diverter valve; 521: first vapor supply branch; 522: second vapor supply branch; 530: fourth diverter valve; 600: lithium extraction plant; 710: building heating water supply pipeline; 720: building heating return pipeline; 1: brine; 1': adsorption tail brine; 1": first qualified liquid; 1‴: condensed first qualified liquid; 2: second qualified liquid; 2': usable water; 2": concentrated waste liquid; 3: third qualified liquid; 3': second condensed water; 4: product; 4': lithium precipitation mother liquor; 5: first vapor; 5': second vapor; 5": third vapor; 6: first condensed water; 7: third condensed water; 8: second cold water; 8': second hot water; 9: first cold water; 9': first hot water; 10: third hot water; 11: cold circulating water; 11': first cold circulating water; 11": second cold circulating water; 12: hot circulating water; 12': first hot circulating water; 12": second hot circulating water; 13: fourth condensed water; 14: solid heat storage component return water; 15: neutralizing tank; 16: building heating water; 17: building heating return water; 17': first building heating return water; 17": second building heating return water; 18: raw water; 18': first raw water; 18": second raw water; 19: third cold water; 20: fourth cold water; 20': fifth cold water; 20": sixth cold water; 22: sixth hot water; 21: ninth hot water; 21': seventh hot water; 21": eighth hot water; 22': fourth hot water; 22": fifth hot water.

### DETAILED DESCRIPTION

Examples of the present disclosure will be exemplarily described in detail hereinafter with reference to accompanying drawings in which the same or like reference characters refer to the same or like elements or elements having the same or like functions throughout. The examples described below by reference to the accompanying drawings are exemplary and are intended for explanation only and are not to be construed as limiting the present disclosure.

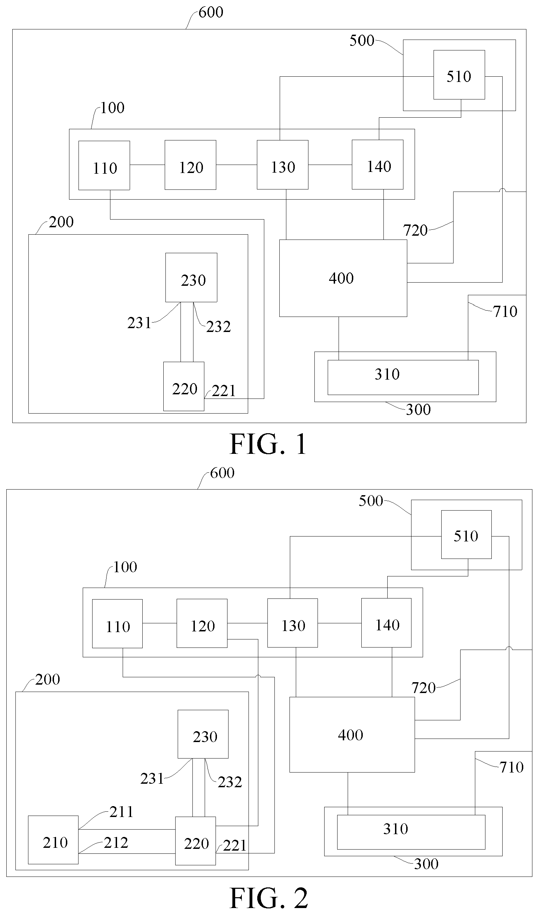

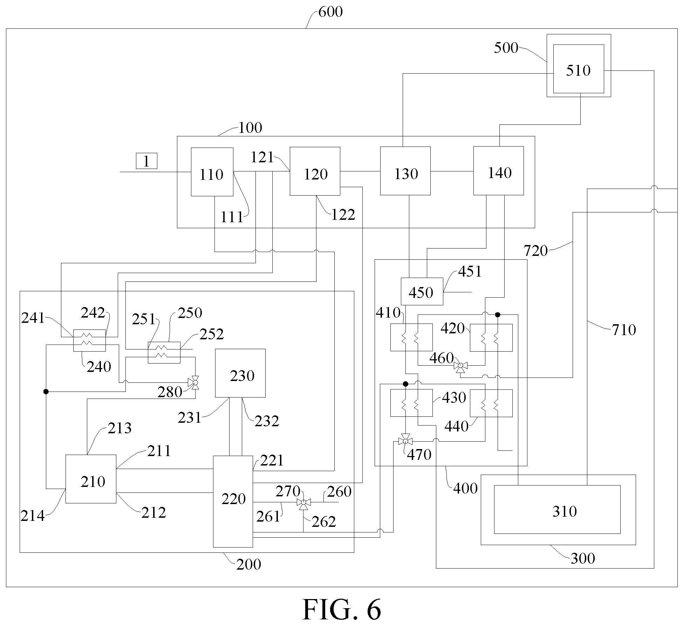

According to an aspect of the present disclosure, the present disclosure provides an energy supply system suitable for lithium extraction from salt lakes. According to some examples of the present disclosure, referring to FIG. 1 to FIG. 7, the energy supply system suitable for lithium extraction from salt lakes may include a lithium extraction unit 100, a water supply unit 200, a heating unit 300, a heat exchange unit 400, a vapor supply unit 500, and a lithium extraction plant 600. The lithium extraction unit 100, the water supply unit 200, the heating unit 300, the heat exchange unit 400, and the vapor supply unit 500 are all arranged in the lithium extraction plant 600. The water supply unit 200 comprises a water storage tank 220 and a first solid heat storage component 230, and a hot water outlet 231 of the first solid heat storage component and a cold water inlet 232 of the first solid heat storage component are respectively connected to the water storage tank 220. The heating unit 300 comprises a second solid heat storage component 310, the second solid heat storage component 310 is connected to the heat exchange unit 400, and the second solid heat storage component 310 is connected to the lithium extraction plant 600 through a building heating water supply pipeline 710. The lithium extraction unit 100 comprises an adsorption component 110, a membrane component 120, an evaporation component 130, and a lithium precipitation component 140 which are connected in sequence, and a hot water outlet 221 of the water storage tank is connected to the adsorption component 110 to provide required hot water for the adsorption component 120. The vapor supply unit 500 comprises a third solid heat storage component 510, and the third solid heat storage component 510 is respectively connected to the evaporation component 130 and the lithium precipitation component 140 to provide a vapor heat source for the evaporation component 130 and the lithium precipitation component 140. The second solid heat storage component 310 is connected to the heat exchange unit 400, the lithium extraction plant 600 is connected to the heat exchange unit 400 through a building heating return pipeline 720, and the second solid heat storage component 310, the building heating water supply pipeline 710, the lithium extraction plant 600, the building heating return pipeline 720, and the heat exchange unit 400 form a heating loop. The evaporation component 130 and the lithium precipitation component 140 are respectively connected to the heat exchange unit 400, and condensed water in the evaporation component 130 and the lithium precipitation component 140 is used for exchanging heat with building heating return water in the building heating return pipeline 720 in the heat exchange unit 400. The heat exchange unit 400 is connected to the third solid heat storage component 510, and the vapor heat source provided by the third solid heat storage component 510 returns to the third solid heat storage component 510 after heat exchange. Therefore, the solid heat storage components, the heat exchange units and the like can be used to form an energy supply system, to provide process hot water, process vapor and heating for salt lake lithium extraction, and at the same time, make full use of the waste heat generated by building heating, thereby effectively reducing the initial investment and operation costs of the energy supply system, reducing carbon emissions or even realizing zero carbon emissions, and avoiding adverse effects on the environment.

According to some examples of the present disclosure, the evaporation component 130 may be a mechanical vapor recompression (MVR) component or a multi-purpose evaporator. In this way, the second qualified liquid may be better evaporated and concentrated, to achieve better solid-liquid separation.

According to some examples of the present disclosure, referring to FIG. 2 to FIG. 7, the water supply unit 200 may further include a water source heat pump 210, and a hot water outlet 211 of the water source heat pump and a cold water inlet 212 of the water source heat pump are respectively connected to the water storage tank 220.

According to some examples of the present disclosure, referring to FIG. 2 to FIG. 7, the membrane component 120 is connected to the water storage tank 220, and usable water obtained through treatment by the membrane component 120 enters the water storage tank 220.

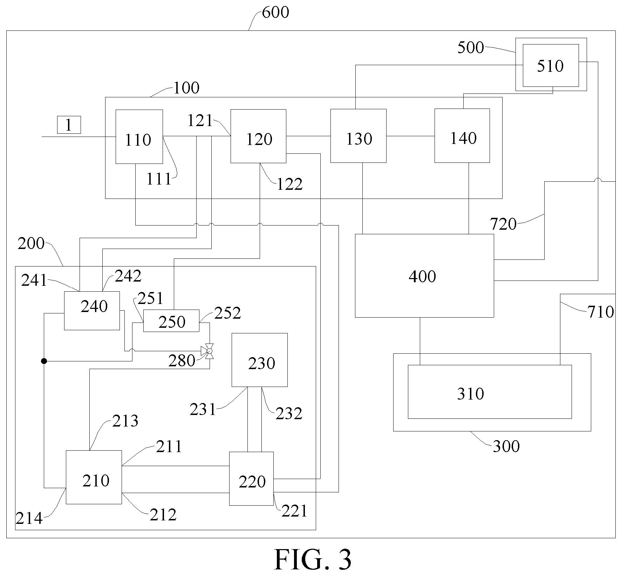

According to some examples of the present disclosure, referring to FIG. 3 to FIG. 7, the water supply unit 200 may further include a first heat exchange component 240 and a second heat exchange component 250. The first heat exchange component 240 is connected to a cold circulating water outlet 213 of the water source heat pump and a hot circulating water inlet 214 of the water source heat pump, a hot side inlet 241 of the first heat exchange component is connected to a first outlet 111 of the adsorption component, a hot side outlet 242 of the first heat exchange component is connected to an inlet 121 of the membrane component, brine 1 is treated by the adsorption component 110 to obtain a first qualified liquid, and a part of cold circulating water in the water source heat pump 210 enters the first heat exchange component 240 and exchanges heat with the first qualified liquid in the first heat exchange component 240. The second heat exchange component 250 is connected to the cold circulating water outlet 213 of the water source heat pump and the hot circulating water inlet 214 of the water source heat pump, a hot side inlet 251 of the second heat exchange component is connected to a concentrated waste liquid outlet 122 of the membrane component, the first qualified liquid is treated by the membrane component 120 to generate a second qualified liquid, the usable water, and the concentrated waste liquid, a part of the cold circulating water in the water source heat pump 210 enters the second heat exchange component 250 and exchanges heat with the concentrated waste liquid in the second heat exchange component 250, and the concentrated waste liquid is discharged through a hot side outlet 252 of the second heat exchange component after the heat exchange. The brine 1 is subjected to the adsorption treatment in the adsorption component to form adsorption tail brine, and the adsorption tail brine can be discharged from the energy supply system. After the brine 1 is subjected to the adsorption treatment, desorption treatment is further performed in the adsorption component. A hot water temperature required for desorption may be 35°C to 45°C. Hot water required for desorption is provided by the water storage tank 220. A first qualified liquid is formed after the desorption treatment. The temperature of the first qualified liquid is 35°C to 45°C. When the lithium extraction unit 100 operates normally, the first qualified liquid enters the first heat exchange component 240, and exchanges heat with cold circulating water in the first heat exchange component 240. A heat exchange end difference of the first heat exchange component 240 (in this specification, the heat exchange end difference refers to the temperature difference between the hot side inlet and the cold side outlet of the heat exchange component) may be 8°C to 15°C. The temperature of the first qualified liquid drops to 18°C to 22 C after the heat exchange. Then the first qualified liquid enters the membrane component 120. After being treated by the membrane component 120, the first qualified liquid is divided into the second qualified liquid, the usable water and the concentrated waste liquid. The temperature of the second qualified liquid, the usable water and the concentrated waste liquid is 23°C to 30°C. The second qualified liquid enters the evaporation component 130 for subsequent treatment, the usable water enters the water storage tank 220, and the concentrated waste liquid enters the second heat exchange component 250 (which may have a heat exchange end difference of 3°C to 8°C), exchanges heat with the cold circulating water, and then is discharged from the hot side outlet 252 of the second heat exchange component. The energy supply system can use the first qualified liquid and the concentrated waste liquid to exchange heat with the cold circulating water in the water source heat pump, thereby using the heat of the first qualified liquid and the concentrated waste liquid to raise the temperature of the cold circulating water, reducing the energy consumption of the water source heat pump and reducing the operation costs of the energy supply system.

According to some examples of the present disclosure, referring to FIG. 3 to FIG. 7, the water supply unit 200 may further include a fifth diverter valve 280. The fifth diverter valve 280 may split the cold circulating water in the water source heat pump 210, so that a part of the cold circulating water enters the first heat exchange component 240 for exchanging heat, and another part of the cold circulating water enters the second heat exchange component 250 for exchanging heat. Hot circulating water obtained by the heat exchange of the two parts of the cold circulating water may first merge into one stream and then enter the water source heat pump 210.

According to some examples of the present disclosure, the number of water source heat pumps 210 may be set to one, as shown in FIG. 2 to FIG. 7. According to some other examples of the present disclosure, the number of water source heat pumps 210 may also be set to two. One water source heat pump is connected to the first heat exchange component 240, and the other water source heat pump is connected to the second heat exchange component 250. Cold water in the water storage tank may be divided into two streams which enter the two water source heat pumps respectively. The two cold water streams absorb heat to form two hot water streams, which may first merge into one hot water stream and then flow into the water storage tank.

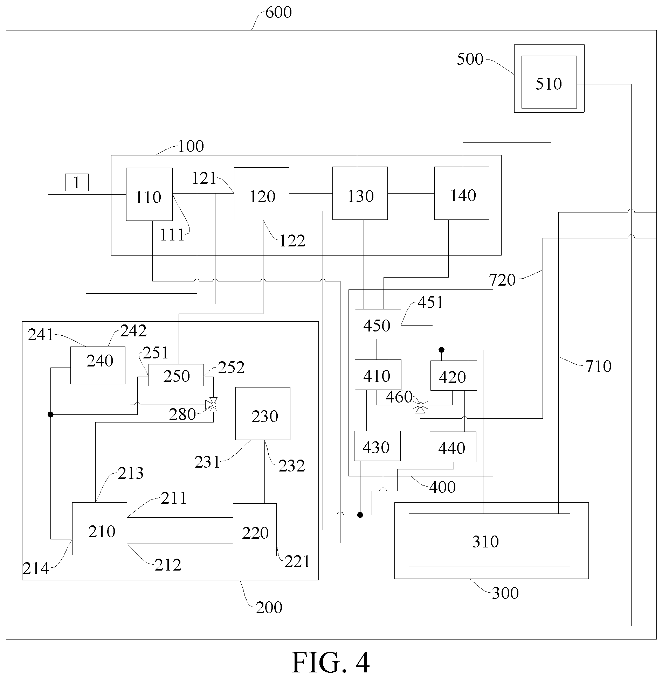

According to some examples of the present disclosure, referring to FIG. 4 to FIG. 7, the heat exchange unit 400 includes a third heat exchange component 410, a fourth heat exchange component 420, a fifth heat exchange component 430, a sixth heat exchange component 440, and a condensate recovery component 450. Referring to FIG. 4 to FIG. 7, the condensate recovery component 450 has a drain port 451. The drain port 451 may be configured to drain a part of water in the lithium extraction unit when the energy supply system (or lithium extraction unit) is started. The condensate recovery component 450 is connected to the evaporation component 130, the lithium precipitation component 140, and the third heat exchange component 410; the third heat exchange component 410 is connected to the fifth heat exchange component 430 and the second solid heat storage component 310; the fourth heat exchange component 420 is connected to the lithium precipitation component 140, the second solid heat storage component 310, and the sixth heat exchange component 440; the fifth heat exchange component 430 and the sixth heat exchange component 440 are connected to the water storage tank 220; the building heating return pipeline 720 is connected to the third heat exchange component 410 and the fourth heat exchange component 420. In a heating season, when the lithium extraction unit 100 operates normally, the evaporation component 130 and the lithium precipitation component 140 both generate condensed water, the condensed water generated by the evaporation component 130 and the lithium precipitation component 140 enters and merges in a condensed water recovery device 450, the condensed water from the condensed water recovery device enters the third heat exchange component 410 and exchanges heat with a part of the building heating return water in the third heat exchange component 410, and then the condensed water enters the fifth heat exchange component 430 and exchanges heat with water in the fifth heat exchange component 430 to form solid heat storage component return water. A lithium precipitation mother liquor generated by the lithium precipitation component 140 enters the fourth heat exchange component 420 and exchanges heat with a part of the building heating return water in the fourth heat exchange component 420, and then the lithium precipitation mother liquor enters the sixth heat exchange component 440 and exchanges heat with water in the sixth heat exchange component 440. The condensed water generated by the evaporation component and the lithium precipitation component has a high temperature. The energy supply system can use the condensed water generated by the evaporation component and the lithium precipitation component to fully exchange heat with the building heating return water, thereby fully utilizing the waste heat of the condensed water and the lithium precipitation mother liquor to heat the building heating return water. The building heating return water after the heat exchange enters the second solid heat storage component, which can reduce the energy consumption of the second solid heat storage component and make full use of heat.

According to some examples of the present disclosure, referring to FIG. 4 to FIG. 7, the heat exchange unit 400 may further include a first diverter valve 460, and the first diverter valve 460 is connected to the building heating return line 720, the third heat exchange component 410, and the fourth heat exchange component 420. The first diverter valve 460 may split the building heating return water in the building heating return pipeline 720, a part of the building heating return water flows into the third heat exchange component 410 and exchanges heat with the condensed water, and another part of the building heating return water enters the fourth heat exchange component 420 and exchanges heat with the lithium precipitation mother liquor, thereby making full use of the waste heat of the condensed water and the lithium precipitation mother liquor, and reducing the energy consumption and operation costs of the system.

According to some examples of the present disclosure referring to FIG. 4 to FIG. 7, the fifth heat exchange component 430 is connected to the vapor supply unit 500 to provide the solid heat storage component return water for the vapor supply unit 500. In the heating season, when the lithium extraction unit 100 operates normally, the condensed water exchanges heat with the building heating return water in the third heat exchange component 410, and then enters the fifth heat exchange component 430 and exchanges heat with water in the fifth heat exchange component 430 to form solid heat storage component return water. The fifth heat exchange component 430 is connected to the vapor supply unit 500, and the solid heat storage component return water formed after the heat exchange may enter the vapor supply unit 500. In this way, the solid heat storage component return water is provided to the vapor supply unit 500.

According to some examples of the present disclosure, the first heat exchange component 240, the second heat exchange component 250, the third heat exchange component 410, the fourth heat exchange component 420, the fifth heat exchange component 430, and the sixth heat exchange component 440 may each independently be a plate heat exchanger, a shell-and-tube heat exchanger, a tubular heat exchanger, etc. According to some specific examples of the present disclosure, the first heat exchange component 240, the second heat exchange component 250, the third heat exchange component 410, the fourth heat exchange component 420, the fifth heat exchange component 430, and the sixth heat exchange component 440 may all be plate heat exchangers. The low costs of the plate heat exchangers help reduce the costs of the energy supply system. Moreover, all the above heat exchange components have good performance in recovering process waste heat, with mature technologies and reliable performance. According to some examples of the present disclosure, the first heat exchange component 240, the second heat exchange component 250, the third heat exchange component 410, the fourth heat exchange component 420, the fifth heat exchange component 430, and the sixth heat exchange component 440 may all be arranged in a countercurrent manner.

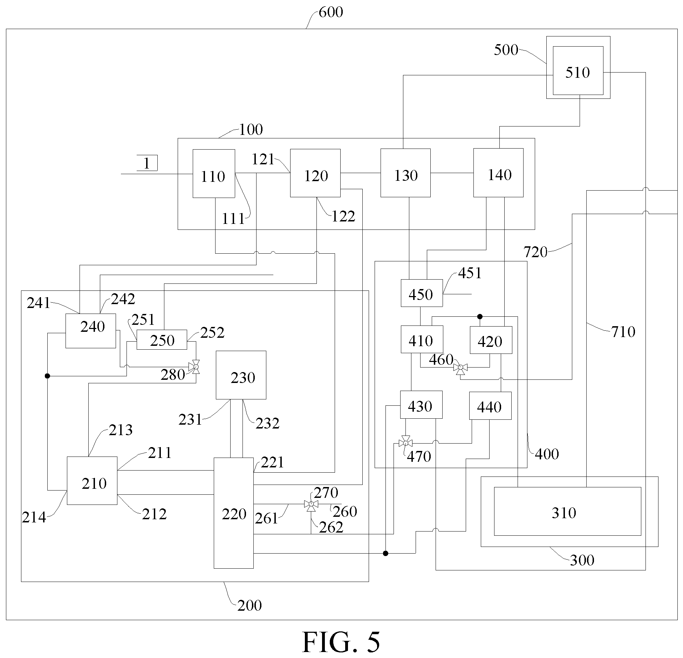

According to some examples of the present disclosure, referring to FIG. 5 to FIG. 7, the water supply unit 200 may further include a raw water supply pipeline 260 and a second diverter valve 270. The second diverter valve 270 splits the raw water supply pipeline 260 into a first branch 261 and a second branch 262. The first branch 261 is connected to the water storage tank 220, so that a part of raw water enters the water storage tank 220. The second branch 262 is connected to the fifth heat exchange component 430, so that a part of the raw water and a part of the cold water in the water storage tank 220 enter the heat exchange unit 400. According to some specific examples of the present disclosure, referring to FIG. 5 to FIG. 7, the second branch may also be connected to the water storage tank 220, and the water in the water storage tank 220 flows out and is mixed with the raw water in the second branch 262 before entering the heat exchange unit 400.

According to some examples of the present disclosure, referring to FIG. 5 to FIG. 7, the heat exchange unit 400 may further include a third diverter valve 470. The third diverter valve 470 is connected to the second branch 262, and the third diverter valve 470 is connected to the fifth heat exchange component 430 and the sixth heat exchange component 440, so that water in the second branch 262 may be diverted into two parts by the third diverter valve 470. One of the two parts enters the fifth heat exchange component 430 and exchanges heat with the condensed water in the fifth heat exchange component 430, and the other part enters the sixth heat exchange component 440 and exchanges heat with the lithium precipitation mother liquor in the sixth heat exchange component 440.

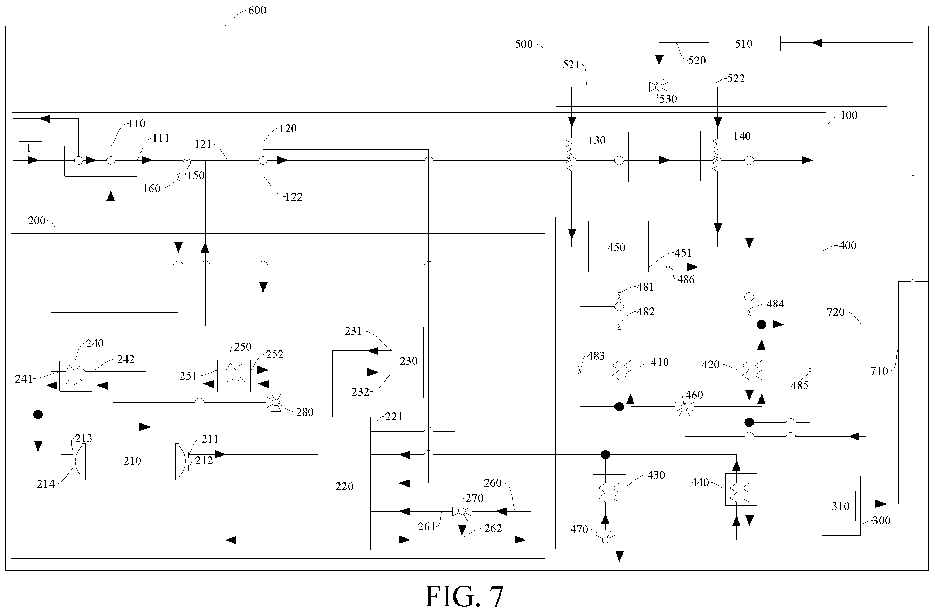

According to some examples of the present disclosure, referring to FIG. 7, the heat exchange unit 400 may further include a first valve 481, a second valve 482, a third valve 483, a fourth valve 484, and a fifth valve 485. The first valve 481 and the second valve 482 are arranged in sequence between the condensate recovery component 450 and the third heat exchange component 410. The first valve 481 is arranged close to the condensate recovery component 450. One port of the third valve 483 is arranged between the first valve 481 and the second valve 482, and another port of the third valve 483 is arranged between the third heat exchange component 410 and the fifth heat exchange component 430. If the first valve 481 and the second valve 482 are open and the third valve 483 is closed, the condensed water may enter the third heat exchange component 410 and the fifth heat exchange component 430 in sequence for exchanging heat. If the second valve 482 is closed and the first valve 481 and the third valve 483 are open, the condensed water may directly flow from the condensate recovery component 450 into the fifth heat exchange component 430 for exchanging heat. According to an example of the present disclosure, referring to FIG. 7, the fourth valve 484 is arranged between the lithium precipitation component 140 and the fourth heat exchange component 420, one port of the fifth valve 485 is arranged between the lithium precipitation component 140 and the fourth valve 484, and another port of the fifth valve 485 is arranged between the fourth heat exchange component 420 and the sixth heat exchange component 440. If the fourth valve 484 is open and the fifth valve 485 is closed, the lithium precipitation mother liquor may enter the fourth heat exchange component 420 and the sixth heat exchange component 440 in sequence. If the fourth valve 484 is closed and the fifth valve is open, the lithium precipitation mother liquor may directly flow from the lithium precipitation component 140 into the sixth heat exchange component 440 for exchanging heat. The energy supply system has a starting process and a normal operation process, and the arrangement of the multiple valves facilitates the operation and control of the starting and normal operation of the system.

According to some examples of the present disclosure, referring to FIG. 7, the heat exchange unit 400 may further include a sixth valve 486. The sixth valve 486 is connected to a pipeline where the drain port 451 is located. When the lithium extraction unit 100 is started, the first valve 481 is closed and the sixth valve 486 is open, so that a part of the water in the lithium extraction unit 100 may be discharged from the drain port 451. When the lithium extraction unit 100 operates normally, the sixth valve 486 is closed, so that the condensed water enters the third heat exchange component 410 or the fifth heat exchange component 430 for exchanging heat.

According to some examples of the present disclosure, referring to FIG. 7, the lithium extraction unit 100 may further include a seventh valve 150 and an eighth valve 160. The seventh valve 150 is connected to the adsorption component 110 and the membrane component 120. The eighth valve 160 is connected to the adsorption component 110 and the first heat exchange component 240. When the lithium extraction unit 100 is started, the seventh valve 150 is open and the eighth valve 160 is closed, and the first qualified liquid generated by the adsorption component 110 directly enters the membrane component 120. When the lithium extraction unit 100 operates normally, the seventh valve 150 is closed and the eighth valve 160 is open, and the first qualified liquid generated by the adsorption component 110 first enters the first heat exchange component 240 for exchanging heat, and then enters the membrane component 120 for subsequent treatment.

According to some examples of the present disclosure, referring to FIG. 7, the vapor supply unit 500 comprises a vapor supply pipeline 520 and a fourth diverter valve 530, the vapor supply pipeline 520 is configured to connect the third solid heat storage component 310 and the fourth diverter valve 530, the fourth diverter valve 530 divides the vapor supply pipeline 520 into a first vapor supply branch 521 and a second vapor supply branch 522, the first vapor supply branch 521 is connected to the evaporation component 130, and the second vapor supply branch 522 is connected to the lithium precipitation component 140. The arrangement of the fourth diverter valve 530 divides the vapor in the vapor supply pipeline 520 into two parts, so that the vapor generated by the vapor supply unit 500 enters the evaporation component 130 and the lithium precipitation component 140 through the first vapor supply pipeline 521 and the second vapor supply pipeline 522 respectively, thereby providing required vapor to the evaporation component 130 and the lithium precipitation component 140.

The energy supply system suitable for lithium extraction from salt lakes according to the present disclosure integrates the solid heat storage components, the heat exchange units and other components and devices, can reduce carbon emissions and even realize zero carbon emissions in the process while providing process hot water, process vapor and heating needed for salt lake lithium extraction, can effectively reduce the initial investment and operation costs of the whole system by fully reusing the waste heat in the lithium extraction process, and has broad application prospects in the field of lithium extraction from salt lakes.

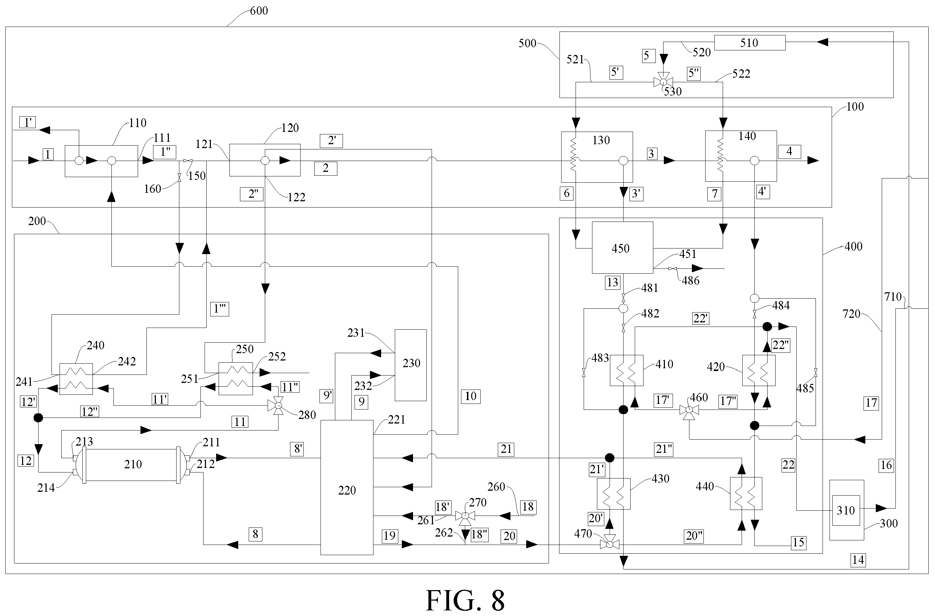

According to another aspect of the present disclosure, the present disclosure provides a method for supplying energy using the energy supply system suitable for lithium extraction from salt lakes. According to an example of the present disclosure, referring to FIG. 8, the method for supplying energy using the energy supply system suitable for lithium extraction from salt lakes includes: the first solid heat storage component 230, the second solid heat storage component 310, and the third solid heat storage component 510 storing heat during valley power; brine 1 entering the adsorption component 110 and being absorbed by an adsorbent; generated adsorption tail brine 1' being discharged from the energy supply system; after being absorbed by the adsorbent, the brine 1 being subjected to desorption treatment to form a first qualified liquid 1"; the first qualified liquid 1" entering the membrane component 120 and being treated to obtain usable water 2' and a second qualified liquid 2; the second qualified liquid 2 entering the evaporation component 130 for evaporation and concentration treatment to form a third qualified liquid 3, the third qualified liquid entering the lithium precipitation component 140, the third qualified liquid 3 being treated by the lithium precipitation component to obtain a product 4 and a lithium precipitation mother liquor 4', and the lithium precipitation mother liquor 4' entering the heat exchange unit 400; building heating return water 17 generated by the lithium extraction plant 600 entering the heat exchange unit 400; after exchanging heat in the heat exchange unit 400, the building heating return water 17 entering the second solid heat storage component 310 to generate building heating water 16, and the building heating water 16 being transmitted to the lithium extraction plant 600; and the heat exchange unit 400 generating solid heat storage component return water 14, the solid heat storage component return water 14 entering the third solid heat storage component 510, and the third solid heat storage component 510 providing a vapor heat source for the evaporation component 130 and the lithium precipitation component 140 of the lithium extraction unit 100.

According to some examples of the present disclosure, referring to FIG. 8, first cold water 9 in the water storage tank 220 enters the first solid heat storage component 230 and is heated to form first hot water 9', the first hot water enters the water storage tank 220, second cold water 8 in the water storage tank 220 enters the water source heat pump 210 to absorb heat to form second hot water 8', the second hot water enters the water storage tank 220, and third hot water 10 in the water storage tank 220 enters the adsorption component 110 through the hot water outlet 221 of the water storage tank for desorption treatment of the adsorbent.

According to some examples of the present disclosure, referring to FIG. 8, the usable water 2" obtained through the treatment of the first qualified liquid 1" in the membrane component 120 enters the water storage tank 220.

According to some examples of the present disclosure, the product 4 may be a lithium carbonate product. After the product is recovered by a packaging machine, the lithium extraction process ends.

According to an example of the present disclosure, before the lithium extraction unit 100 is started, the first solid heat storage component 230, the second solid heat storage component 310, and the third solid heat storage component 510 store heat during valley power, so as to utilize the low electricity price during valley power to store enough heat energy required by the lithium extraction unit, and provides process vapor, process hot water and plant heating for salt lake lithium extraction. It should be noted that, the first solid heat storage component 230, the second solid heat storage component 310, and the third solid heat storage component 510 may be open or closed respectively according to actual needs. For example, the second solid heat storage component 310 is mainly used for heating each workshop of the lithium extraction plant 600, and is used in the heating season. If the lithium extraction plant 600 needs heating, the second solid heat storage component 310 is turned on; if no heating is needed, the second solid heat storage component 310 is turned off. It should also be noted that the first solid heat storage component 230 may guarantee hot water supply and process heating for the start-up state and emergency state.

According to an example of the present disclosure, the brine 1 is treated by the adsorption component 110, the membrane component 120, the evaporation component 130 and the lithium precipitation component 140 to form the product 4 (e.g., the lithium carbonate product).

According to some examples of the present disclosure, the brine 1 is subjected to the adsorption treatment and desorption treatment in the adsorption component 110 to obtain the first qualified liquid 1", and the adsorption tail brine 1' formed in the adsorption treatment process may be discharged from the energy supply system. The desorption treatment requires a lot of hot water. The hot water temperature may be 35°C to 45°C. The hot water required for the desorption process may be provided by the water storage tank 220. Referring to FIG. 8, the second cold water 8 in the water storage tank 220 enters the water source heat pump 210 to absorb heat and form the second hot water 8', the second hot water 8' enters the water storage tank 220, the first cold water 9 in the water storage tank 220 enters the first solid heat storage component 230 and is heated to form the first hot water 9', the first hot water 9' enters the water storage tank 220, and the third hot water 10 in the water storage tank 220 flows out from the hot water outlet 211 of the water source heat pump and enters the adsorption component 110 for the desorption treatment of the adsorbent. According to some examples of the present disclosure, the first qualified liquid 1" obtained after the desorption treatment has a temperature of 35°C to 45°C and may exchange heat in the first heat exchange component before entering the membrane component.

According to some examples of the present disclosure, referring to FIG. 8, the fifth diverter valve 280 may split the cold circulating water 11 in the water source heat pump 210. The cold circulating water 11 in the water source heat pump flows out of the cold circulating water outlet 213 of the water source heat pump and is divided into two streams at the fifth diverter valve 280 to form first cold circulating water 11' and second cold circulating water 11". The temperature of the first qualified liquid 1" is 35°C to 45°C. When the lithium extraction unit 100 operates normally, the first qualified liquid 1" flows out from the first outlet 111 of the adsorption component, enters the first heat exchange component 240 through the hot side inlet 241 of the first heat exchange component, and exchanges heat with the first cold circulating water 11' in the water source heat pump 210. The first qualified liquid 1" forms condensed first qualified liquid 1‴ after releasing heat through the heat exchange. The temperature of the condensed first qualified liquid 1‴ is 18°C to 22°C. The condensed first qualified liquid 1‴ flows out of the hot side outlet 242 of the first heat exchange component, and enters the membrane component 120 through the inlet 121 of the membrane component. The condensed first qualified liquid 1‴ is treated by the membrane component 120 to obtain the usable water 2', the second qualified liquid 2, and the concentrated waste liquid 2". The temperatures of the usable water 2', the second qualified liquid 2 and the concentrated waste liquid 2" are all 23°C to 30°C. The concentrated waste liquid 2" flows out of the concentrated waste liquid outlet 122 of the membrane component, and enters the second heat exchange component 250 (which may have a heat exchange end difference of 3°C to 8°C) through the hot side inlet 251 of the second heat exchange component. The second cold circulating water 11" in the water source heat pump 210 enters the second heat exchange component 250 and exchanges heat with the concentrated waste liquid 2" in the second heat exchange component 250. The concentrated waste liquid 2" is discharged through the hot side outlet 252 of the second heat exchange component after releasing heat through the heat exchange. The first cold circulating water 11' and the second cold circulating water 11" respectively flow out of the water source heat pump 210 and enter the first heat exchange component 240 and the second heat exchange component 250, and the hot circulating water 12 obtained after heat exchange enters the water source heat pump 210. According to some examples of the present disclosure, referring to FIG. 8, the first cold circulating water 11' absorbs heat in the first heat exchange component 240 to form the first hot circulating water 12', the second cold circulating water 11" absorbs heat in the second heat exchange component 250 to form the second hot circulating water 12", and the first hot circulating water 12' and the second hot circulating water 12" merge to form the hot circulating water 12, which enters the water source heat pump 210. It should be noted that a split ratio of the first cold circulating water 11' and the second cold circulating water 11" may be designed according to a ratio of a heat exchange capacity in the first heat exchange component 240 to a heat exchange capacity the fifth heat exchange component 250, and is adjusted and controlled by the fifth diverter valve 280.

According to an example of the present disclosure, the condensate recovery component 450 collects the condensed water generated by the evaporation component 130 and the lithium precipitation component 140. In a heating season, when the lithium extraction unit 100 operates normally, the condensed water collected by the condensate recovery component 450 enters the third heat exchange component 410 and exchanges heat with a part of the building heating return water in the third heat exchange component 410, then the condensed water enters the fifth heat exchange component 430 and exchanges heat with water in the fifth heat exchange component 430 to generate the solid heat storage component return water 14, and the solid heat storage component return water 14 enters the third solid heat storage component 510. The lithium precipitation mother liquor 4' generated by the lithium precipitation component 140 enters the fourth heat exchange component 420 and exchanges heat with a part of the building heating return water in the fourth heat exchange component 420, and then the lithium precipitation mother liquor 4' enters the sixth heat exchange component 440 and exchanges heat with water in the sixth heat exchange component 440. After releasing heat twice through the heat exchange, the lithium precipitation mother liquor enters the neutralizing tank 15 for neutralization reaction.

According to some examples of the present disclosure, the vapor supply unit 500 provides a required vapor heat source for the evaporation component and the lithium extraction component. Referring to FIG. 8, first vapor 5 generated by the third solid heat storage component 510 is divided into second vapor 5' and third vapor 5" at the fourth diverter valve 530 by the vapor supply pipeline 520. The second vapor 5' enters the evaporation component 130 through a first vapor branch 521, and the second vapor 5' preheats the second qualified liquid 2 in the evaporation component 130 to form first condensed water 6. The first condensed water 6 enters the condensate recovery component 450. The first condensed water 6 has a temperature of 120°C to 150°C and a pressure of 0.4 MPa to 0. 5 MPa. The first condensed water 6 enters the condensate recovery component 450 after the pressure is reduced to 0.1 MPa to 0. 15 MPa by a pressure reducing valve. After the second qualified liquid 2 is evaporated and concentrated in the evaporation component 130, the second condensed water 3' and the third qualified liquid 3 are generated. The third qualified liquid 3 has a temperature of 85°C to 90°C and a pressure of 0.08 MPa to 0. 09 MPa. The second condensed water 3' has a temperature of 100°C to 120°C and a pressure 0.1 MPa to 0. 15 MPa. The second condensed water 3' enters the condensate recovery component 450. The third qualified liquid 3 enters the lithium precipitation component 140 and is separated into two parts: the lithium precipitation mother liquor 4' and the product 4. The temperature of lithium precipitation mother liquor 4' is 85°C to 95°C. The third vapor 5" enters the lithium precipitation component 140 through a second vapor branch 522. The third vapor 5" releases heat in the lithium precipitation component 140 to form third condensed water 7. The third condensate 7 has a temperature of 120°C to 150°C and a pressure of 0.4 MPa to 0. 5 MPa. The third condensed water 7 enters the condensate recovery component 450 after the pressure is reduced to 0.1 MPa to 0. 15 MPa by a pressure reducing valve. The first condensed water 6, the second condensed water 3' and the third condensed water 7 merge in the condensate recovery component 450 to form fourth condensed water 13. The temperature of the fourth condensed water 13 is 100°C to 110°C, and the fourth condensed water 13 enters the third heat exchange component 410 or the fifth heat exchange component 430 for exchanging heat.

According to an example of the present disclosure, the fourth condensed water 13 and the lithium precipitation mother liquor 4' respectively exchange heat with the building heating return water in the third heat exchange component 410 and the fourth heat exchange component 420. The third heat exchange component 410 has a heat exchange end difference of 3°C to 15°C. The temperature of the hot side outlet of the third heat exchange component 410 is 70°C to 80°C, i.e., the temperature of the fourth condensed water 13 after releasing heat through heat exchange in the third heat exchange component is 70°C to 80°C. The fourth heat exchange component 420 has a heat exchange end difference of 10°C to 20°C. The temperature of the hot side outlet of the fourth heat exchange component 420 may be 18°C to 22°C, i.e., the temperature of the lithium precipitation mother liquor 4' after releasing heat through heat exchange in the fourth heat exchange component 420 is 18°C to 22°C. The building heating return water 17 enters the second solid heat storage component 310 after exchanging heat in the third heat exchange component 410 and the fourth heat exchange component 420. According to some examples of the present disclosure, referring to FIG. 8, the building heating return water 17 in the building heating return pipeline 720 is divided into two parts by the first diverter valve 460, one part (i.e., first building heating return water 17') entering the third heat exchange component 410, and the other part (i.e., second building heating return water 17") entering the fourth heat exchange component 420. The first building heating return water 17' absorbs heat through heat exchange with the fourth condensed water 13 in the third heat exchange component 410 to form fourth hot water 22'. The second building heating return water 17" absorbs heat through heat exchange with the lithium precipitation mother liquor 4' in the fourth heat exchange component 420 to form fifth hot water 22". The fourth hot water 22' and the fifth hot water 22" merge to form sixth hot water 22. The sixth hot water 22 enters the second solid heat storage component 310. The second solid heat storage component provides building heating water 16 for each workshop of the lithium extraction plant. The building heating return water may respectively absorb heat from the fourth condensed water and the lithium extraction mother liquor in the third heat exchange component and the fourth heat exchange component, to make full use of waste heat, thereby saving energy and achieving better recycling of energy.

According to an example of the present disclosure, referring to FIG. 8, raw water 18 provides cold water to the water storage tank 220. The raw water 18 is divided into two parts by the second diverter valve 270. The raw water supply pipeline 260 is divided into the first branch 261 and the second branch 262 by the second diverter valve 270. The second diverter valve 270 may control flow rates of the raw water 18 in the first branch 261 and the second branch 262. A part of the raw water (i.e., first raw water 18') directly enters the water storage tank 220 through the first branch 261, and the other part of the raw water (i.e., second raw water 18") is mixed with third cold water 19 from the water storage tank 220 through the second branch 262 and then enters the fifth heat exchange component 430 and the sixth heat exchange component 440 for exchanging heat. It should be noted that a split ratio of the first raw water 18' and the second raw water 18" may be calculated through heat balance, and is adjusted and controlled by the second diverter valve 270.

According to some examples of the present disclosure, a part of the raw water (i.e., the second raw water 18") is mixed with the third cold water 19 from the water storage tank 220 to form fourth cold water 20. The fourth cold water 20 is divided at the third diverter valve 470 into two parts, namely, fifth cold water 20' and sixth cold water 20". The fifth cold water 20' and the sixth cold water 20" respectively flow into the fifth heat exchange component 430 and the sixth heat exchange component 440. The fifth cold water 20' absorbs heat through heat exchange with the condensed water in the fifth heat exchange component 430 to form seventh hot water 21'. The sixth cold water 20" absorbs heat through heat exchange with the lithium precipitation mother liquor 4' in the sixth heat exchange component 440 to form eighth hot water 21". The seventh hot water 21' and the eighth hot water 21" merge to form ninth hot water 21. The temperature of the ninth hot water 21 is 55°C to 65°C. The ninth hot water 21 flows into the water storage tank 220. The fifth heat exchange component 430 and the sixth heat exchange component may have a heat exchange end difference of 5°C to 10°C.

According to an example of the present disclosure, the normal operation of the energy supply system is divided into operation in a non-heating season and operation in a heating season. There are certain differences between the normal operation in the non-heating season and the normal operation in the heating season. According to an example of the present disclosure, in the heating season, when the energy supply system operates normally, the second solid heat storage component 310 needs to heat the lithium extraction plant 600, and the fourth condensed water 13 first enters the third heat exchange component 410 to exchange heat with the building heating return water, and then enters the fifth heat exchange component to exchange heat with the water in the fifth heat exchange component. The lithium precipitation mother liquor 4' first enters the fourth heat exchange component 420 and exchanges heat with a part of the building heating return water in the fourth heat exchange component 420, and then the lithium precipitation mother liquor enters the sixth heat exchange component 440 and exchanges heat with water in the sixth heat exchange component 440. In the non-heating season, when the energy supply system operates normally, the second solid heat storage component 310 does not operate, i.e., the second solid heat storage component 310 does not need to heat the lithium extraction plant 600, and the lithium extraction plant 600 does not generate building heating return water. Therefore, the condensed water and the lithium precipitation mother liquor do not need to enter the third heat exchange component 410 and the fourth heat exchange component 420 for exchanging heat, but directly enter the fifth heat exchange component 430 and the sixth heat exchange component 440 for exchanging heat.

According to some specific examples of the present disclosure, in a heating season, when the lithium extraction unit 100 operates normally, the first valve 481 and the second valve 482 are open, the third valve 483 is closed, the fourth condensed water 13 in the condensate recovery component 450 enters the third heat exchange component 410 and the fifth heat exchange component 430 in sequence to release heat and form the solid heat storage component return water 14, the fourth valve 484 is open, the fifth valve 485 is closed, and the lithium precipitation mother liquor 4' enters the fourth heat exchange component 420 and the sixth heat exchange component 440 in sequence to release heat and then enters the neutralizing tank 15 for neutralization reaction.

According to some specific examples of the present disclosure, in the non-heating season, when the lithium extraction unit 100 operates normally, the first valve 481 is open, the second valve 482 is closed, the third valve 483 is open, the fourth condensed water 13 in the condensate recovery component 450 directly enters the fifth heat exchange component 430 and exchanges heat with the water in the fifth heat exchange component 430, the fourth valve 484 is closed, the fifth valve 485 is open, and the lithium precipitation mother liquor 4' directly enters the sixth heat exchange component 440 and exchanges heat with the water in the sixth heat exchange component 440, and after releasing heat, enters the neutralizing tank 15 for neutralization reaction.

According to an example of the present disclosure, in the non-heating season, a ratio of the flow rate in the second branch 262 to the flow rate in the first branch 261 in the non-heating season is defined as a, a ratio of the flow rate in the second branch to the flow rate in the first branch in the heating season is defined as b, and a > b. As mentioned above, in the non-heating season, the condensed water and the lithium precipitation mother liquor do not need to exchange heat with the building heating return water, and the waste heat of the condensed water and the lithium precipitation mother liquor can be used to heat more cold water. Therefore, compared with the heating season, the flow rate in the second branch may be correspondingly increased in the non-heating season, allowing more cold water to absorb heat through heat exchange in the fifth heat exchange component and the sixth heat exchange component to form hot water.

In general, the energy supply system suitable for lithium extraction from salt lakes according to the present disclosure provides a comprehensive solution for process vapor, process hot water and plant heating of the salt lake lithium extraction plant. The system is based on the principle of "orderly echelon utilization of energy", integrates the solid heat storage components, the heat exchange units and other components and devices, and provides process vapor, process hot water and plant heating for the salt lake lithium extraction system. In the process of supplying energy for salt lake lithium extraction using the energy supply system, the waste heat generated in the lithium extraction process can be fully recovered and used to heat raw water or building heating return water, so as to realize the recycling of heat and reduce the operation costs of the system.

The energy supply system provided by the present disclosure is compared respectively with technologies in the related art that can provide similar solutions (including natural gas boilers, solar photothermal devices, electrode boilers, etc.).

Compared with natural gas boilers, the technical solution of the present disclosure has the following prominent advantages: 1) No fossil energy is needed, zero carbon dioxide emissions can be realized in the whole energy supply process, and the carbon dioxide emission reduction per ton of lithium carbonate produced can reach 2 to 4 tons; 2) The energy supply system can be applied to salt lakes in the western region, without being limited by the supply of natural gas resources. This is also in line with China's national policy of West-East Gas Pipeline. 3) The system can make full use of the advantage of low electricity price during valley power to reduce the operation costs of the system. Compared with technical solutions using natural gas boilers, the operation costs are reduced by RMB 1500-4000 yuan per ton of lithium carbonate produced.

Compared with solar photothermal devices, the technical solution of the present disclosure has the following prominent advantages: 1) The initial investment costs are greatly reduced. The initial investment costs of a lithium carbonate factory with a scale of 30,000 tons can be reduced by RMB 450 to 650 million yuan by using the technical solution of the present disclosure. 2) The stability of energy supply is improved, and the technical solution of the present disclosure requires the use of electric power only and does not require the use of fossil energy as supplementary energy. 3) The area occupied by the system is greatly reduced. For the energy supply of a lithium carbonate factory with a scale of 30,000 tons, the area occupied by a solar photothermal device is 1500 to 3000 mu (1 mu=0.0667 hectares), and the area occupied by the energy supply system of the technical solution of the present disclosure is only 6 to 10 mu.

Compared with electrode boilers, the technical solution of the present disclosure has the following prominent advantages: 1) The technical reliability is improved, the operation is more stable, and there is no risk such as tank valve leakage. 2) The energy supply system of the present disclosure adopts the solid heat storage components for heat storage, and can fully utilize the valley power to store the heat energy required for lithium extraction during the valley power period, thereby significantly reducing the power consumption and related operation costs. The operation costs are reduced by RMB 10 to 20 million yuan per ton of lithium carbonate produced.

In the description of the specification, the description with reference to the terms "an example", "another example", "still another example", "some examples", "some specific examples", and so on means that specific features, structures, materials or characteristics described in connection with the example are embraced in at least one example of the present disclosure. In the specification, the illustrative expression of the above terms is not necessarily referring to the same embodiment or example. Moreover, the described specific features, structures, materials or characteristics may be combined in any suitable manners in one or more examples. In addition, where there are no contradictions, the various embodiments or examples described in this specification and features of various embodiments or examples can be combined by those skilled in the art. In addition, it should be noted that in the specification, the terms "first", "second", "third", "fourth", "fifth", "sixth", "seventh", "eighth" and "ninth" are used herein for purposes of description, and are not intended to indicate or imply relative importance or implicitly point out the number of the indicated technical feature.

Although the examples of the present disclosure have been illustrated and described above, it is to be understood that the above examples are exemplary and not to be construed as limiting the present disclosure, and that changes, modifications, substitutions and alterations can be made by those skilled in the art without departing from the scope of the present disclosure.

## Claims

1. An energy supply system suitable for lithium extraction from salt lakes, comprising: a lithium extraction unit, a water supply unit, a heating unit, a heat exchange unit, a vapor supply unit, and a lithium extraction plant, wherein the lithium extraction unit, the water supply unit, the heating unit, the heat exchange unit, and the vapor supply unit are all arranged in the lithium extraction plant;
the water supply unit comprises a water storage tank and a first solid heat storage component, and a hot water outlet of the first solid heat storage component and a cold water inlet of the first solid heat storage component are respectively connected to the water storage tank;
the heating unit comprises a second solid heat storage component, the second solid heat storage component is connected to the heat exchange unit, and the second solid heat storage component is connected to the lithium extraction plant through a building heating water supply pipeline;
the lithium extraction unit comprises an adsorption component, a membrane component, an evaporation component, and a lithium precipitation component which are connected in sequence, and a hot water outlet of the water storage tank is connected to the adsorption component to provide required hot water for the adsorption component;
the vapor supply unit comprises a third solid heat storage component, and the third solid heat storage component is respectively connected to the evaporation component and the lithium precipitation component to provide a vapor heat source for the evaporation component and the lithium precipitation component;
the second solid heat storage component is connected to the heat exchange unit, the lithium extraction plant is connected to the heat exchange unit through a building heating return pipeline, and the second solid heat storage component, the building heating water supply pipeline, the lithium extraction plant, the building heating return pipeline, and the heat exchange unit form a heating loop;
the evaporation component and the lithium precipitation component are respectively connected to the heat exchange unit, and condensed water in the evaporation component and the lithium precipitation component is used for exchanging heat with building heating return water in the building heating return pipeline in the heat exchange unit; and the heat exchange unit is connected to the third solid heat storage component, and the vapor heat source provided by the third solid heat storage component returns to the third solid heat storage component after heat exchange.

2. The energy supply system according to claim 1, wherein, the membrane component is connected to the water storage tank, and usable water obtained through treatment by the membrane component enters the water storage tank;
the water supply unit further comprises a water source heat pump, a first heat exchange component, and a second heat exchange component;
a hot water outlet of the water source heat pump and a cold water inlet of the water source heat pump are respectively connected to the water storage tank;
the first heat exchange component is connected to a cold circulating water outlet of the water source heat pump and a hot circulating water inlet of the water source heat pump, a hot side inlet of the first heat exchange component is connected to a first outlet of the adsorption component, a hot side outlet of the first heat exchange component is connected to an inlet of the membrane component, brine is treated by the adsorption component to obtain a first qualified liquid, and a part of cold circulating water in the water source heat pump enters the first heat exchange component and exchanges heat with the first qualified liquid in the first heat exchange component; and
the second heat exchange component is connected to the cold circulating water outlet of the water source heat pump and the hot circulating water inlet of the water source heat pump, a hot side inlet of the second heat exchange component is connected to a concentrated waste liquid outlet of the membrane component, the first qualified liquid is treated by the membrane component to generate a second qualified liquid, the usable water, and the concentrated waste liquid, a part of the cold circulating water in the water source heat pump enters the second heat exchange component and exchanges heat with the concentrated waste liquid in the second heat exchange component, and the concentrated waste liquid is discharged through a hot side outlet of the second heat exchange component after the heat exchange.

3. The energy supply system according to claim 2, wherein, the heat exchange unit comprises a third heat exchange component, a fourth heat exchange component, a fifth heat exchange component, a sixth heat exchange component, and a condensate recovery component;
the condensate recovery component has a drain port, the condensate recovery component is connected to the evaporation component, the lithium precipitation component, and the third heat exchange component; the third heat exchange component is connected to the fifth heat exchange component and the second solid heat storage component; the fourth heat exchange component is connected to the lithium precipitation component, the second solid heat storage component, and the sixth heat exchange component; the fifth heat exchange component and the sixth heat exchange component are connected to the water storage tank; the building heating return pipeline is connected to the third heat exchange component and the fourth heat exchange component;
in a heating season, when the lithium extraction unit operates normally, the condensed water generated by the evaporation component and the lithium precipitation component enters and merges in the condensate recovery component, the condensed water enters the third heat exchange component and exchanges heat with a part of the building heating return water in the third heat exchange component, and then the condensed water enters the fifth heat exchange component and exchanges heat with water in the fifth heat exchange component to form solid heat storage component return water; and a lithium precipitation mother liquor generated by the lithium precipitation component enters the fourth heat exchange component and exchanges heat with a part of the building heating return water in the fourth heat exchange component, and then the lithium precipitation mother liquor enters the sixth heat exchange component and exchanges heat with water in the sixth heat exchange component.

4. The energy supply system according to claim 3, wherein, the heat exchange unit further comprises a first diverter valve, and the first diverter valve is connected to the building heating return pipeline, the third heat exchange component, and the fourth heat exchange component.

5. The energy supply system according to claim 3 or 4, wherein, the fifth heat exchange component is connected to the vapor supply unit to provide the solid heat storage component return water for the vapor supply unit.

6. The energy supply system according to any one of claims 3 to 5, wherein, the water supply unit further comprises a raw water supply pipeline and a second diverter valve, the second diverter valve divides the raw water supply pipeline into a first branch and a second branch, the first branch is connected to the water storage tank, and the second branch is connected to the fifth heat exchange component.

7. The energy supply system according to claim 6, wherein, the heat exchange unit further comprises a third diverter valve connected to the second branch circuit, and the third diverter valve is connected to the fifth heat exchange component and the sixth heat exchange component.

8. The energy supply system according to any one of claims 3 to 7, wherein, the heat exchange unit further comprises:
a first valve and a second valve, wherein the first valve and the second valve arranged in sequence between the condensate recovery component and the third heat exchange component;
a third valve, wherein one port of the third valve is arranged between the first valve and the second valve, and another port of the third valve is arranged between the third heat exchange component and the fifth heat exchange component;
a fourth valve, wherein the fourth valve is arranged between the lithium precipitation component and the fourth heat exchange component; and
a fifth valve, wherein one port of the fifth valve is arranged between the lithium precipitation component and the fourth valve, and another port of the fifth valve is arranged between the fourth heat exchange component and the sixth heat exchange component.

9. The energy supply system according to any one of claims 3 to 8, wherein, the vapor supply unit comprises a vapor supply pipeline and a fourth diverter valve, the vapor supply pipeline is configured to connect the third solid heat storage component and the fourth diverter valve, the fourth diverter valve divides the vapor supply pipeline into a first vapor supply branch and a second vapor supply branch, the first vapor supply branch is connected to the evaporation component, and the second vapor supply branch is connected to the lithium precipitation component.

10. A method for supplying energy using the energy supply system according to any one of claims 1 to 9, comprising:
the first solid heat storage component, the second solid heat storage component, and the third solid heat storage component storing heat during valley power;
brine entering the adsorption component and being absorbed by an adsorbent; generated adsorption tail brine being discharged from the energy supply system; after being absorbed by the adsorbent, the brine being subjected to desorption treatment to form a first qualified liquid; the first qualified liquid entering the membrane component and being treated to obtain usable water and a second qualified liquid; the second qualified liquid entering the evaporation component for evaporation and concentration treatment to form a third qualified liquid, the third qualified liquid entering the lithium precipitation component, the third qualified liquid being treated by the lithium precipitation component to obtain a product and a lithium precipitation mother liquor, and the lithium precipitation mother liquor entering the heat exchange unit;
building heating return water generated by the lithium extraction plant entering the heat exchange unit; after exchanging heat in the heat exchange unit, the building heating return water entering the second solid heat storage component to generate building heating water, and the building heating water being transmitted to the lithium extraction plant; and
the heat exchange unit generating solid heat storage component return water, the solid heat storage component return water entering the third solid heat storage component, and the third solid heat storage component providing a vapor heat source for the evaporation component and the lithium precipitation component of the lithium extraction unit.

11. The method according to claim 10, wherein first cold water in the water storage tank enters the first solid heat storage component and is heated to form first hot water, the first hot water enters the water storage tank, second cold water in the water storage tank enters the water source heat pump to absorb heat to form second hot water, the second hot water enters the water storage tank, and third hot water in the water storage tank enters the adsorption component for desorption treatment of the adsorbent;
the usable water obtained through the treatment of the first qualified liquid in the membrane component enters the water storage tank;
the first qualified liquid enters the first heat exchange component and exchanges heat with first cold circulating water in the water source heat pump, the first qualified liquid forms condensed first qualified liquid after the heat exchange, and the condensed first qualified liquid enters the membrane component;
the condensed first qualified liquid is treated by the membrane component to obtain the usable water, the second qualified liquid, and the concentrated waste liquid; second cold circulating water in the water source heat pump enters the second heat exchange component and exchanges heat with the concentrated waste liquid in the second heat exchange component, and the concentrated waste liquid is discharged through the hot side outlet of the second heat exchange component after the heat exchange;
the first cold circulating water and the second cold circulating water respectively enter the first heat exchange component and the second heat exchange component through the water source heat pump for exchanging heat to obtain hot circulating water, the hot circulating water enters the water source heat pump.

12. The method according to claim 11, wherein the condensate recovery component collects condensed water generated by the evaporation component and the lithium precipitation component;
in a heating season, when the lithium extraction unit operates normally, the condensed water enters the third heat exchange component and exchanges heat with a part of the building heating return water in the third heat exchange component, then the condensed water enters the fifth heat exchange component and exchanges heat with water in the fifth heat exchange component to generate the solid heat storage component return water, and the solid heat storage component return water enters the third solid heat storage component; and the lithium precipitation mother liquor enters the fourth heat exchange component and exchanges heat with a part of the building heating return water in the fourth heat exchange component, then the lithium precipitation mother liquor enters the sixth heat exchange component and exchanges heat with water in the sixth heat exchange component, and after releasing heat, the lithium precipitation mother liquor enters a neutralizing tank for neutralization reaction.

13. The method according to claim 12, wherein the building heating return water is divided into two parts by the first diverter valve, one part of the building heating return water enters the third heat exchange component, the other part of the building heating return water enters the fourth heat exchange component, and the building heating return water enters the second solid heat storage component after exchanging heat in the third heat exchange component and the fourth heat exchange component.

14. The method according to claim 12 or 13, wherein flow rates of raw water in the first branch and the second branch are controlled by the second diverter valve, a part of the raw water directly enters the water storage tank through the first branch, and another part of the raw water enters the fifth heat exchange component and the sixth heat exchange component after being mixed with third cold water from the water storage tank through the second branch.

15. The method according to claim 14, wherein the part of the raw water mixed with the third cold water from the water storage tank is divided by the third diverter valve into two parts, which respectively flow into the fifth heat exchange component and the sixth heat exchange component, a ratio of the flow rate in the second branch to the flow rate in the first branch in a non-heating season is defined as a, a ratio of the flow rate in the second branch to the flow rate in the first branch in a heating season is defined as b, and a > b.

16. The method according to any one of claims 12 to 15, wherein first vapor generated by the third solid heat storage component is divided into second vapor and third vapor at the fourth diverter valve by the vapor supply pipeline, the second vapor enters the evaporation component through a first vapor branch, the second vapor preheats the second qualified liquid in the evaporation component to form first condensed water, the first condensed water enters the condensate recovery component, the second qualified liquid is evaporated and concentrated in the evaporation component to generate second condensed water and the third qualified liquid, and the second condensed water enters the condensate recovery component; and the third vapor enters the lithium precipitation component through a second vapor branch, the third vapor releases heat in the lithium precipitation component to forms third condensed water, the third condensed water enters the condensate recovery component, the first condensed water, the second condensed water, and the third condensed water merge in the condensate recovery component to form fourth condensed water, and the fourth condensed water enters the third heat exchange component or the fifth heat exchange component.

17. The method according to any one of claims 12 to 16, wherein in a heating season, when the lithium extraction unit operates normally, the first valve and the second valve are open, the third valve is closed, the fourth condensed water in the condensate recovery component enters the third heat exchange component and the fifth heat exchange component in sequence to release heat and form the solid heat storage component return water, the fourth valve is open, the fifth valve is closed, and the lithium precipitation mother liquor enters the fourth heat exchange component and the sixth heat exchange component in sequence to release heat and then enters the neutralizing tank for neutralization reaction.
